# EUROPEAN PATENT SPECIFICATION

(11) **EP 4 602 666 B1**
(45) Date of publication and mention of the grant of the patent: **27.05.2026**
(21) Application number: 22803206.6
(22) Date of filing: 14.10.2022
(51) Int. Cl.: H01M 8/04111, H01M 8/065, C01B 3/10, H01M 8/10

(54) **A FUEL CELL SYSTEM**
BRENNSTOFFZELLENSYSTEM
SYSTÈME DE PILE À COMBUSTIBLE

(43) Date of publication of application: 20.08.2025
(73) Proprietor: VOLVO TRUCK CORPORATION, 405 08 Göteborg (SE)
(72) Inventor: LUNDGREN, Staffan, 438 53 Hindås (SE)
(74) Representative: Kransell & Wennborg KB
(86) International application number: PCT/EP2022/078685
(87) International publication number: WO 2024/078724

(56) References cited:
- WO-A1-02/37590
- CN-A- 112 467 178
- DE-A1- 102013 001 209
- US-A1- 2002 164 515

## Description

### TECHNICAL FIELD

The invention relates to a fuel cell system, a vehicle, and a method for producing electric power in a fuel cell system.

The invention can be applied in heavy-duty vehicles, such as trucks, buses, and construction equipment, but also in stationary applications. Although the invention will be described with respect to a truck, the invention is not restricted to this particular vehicle, but may also be used for other vehicles, vessels, and in other applications, such as in stationery gensets and similar.

### BACKGROUND

Fuel cell systems can be used as a primary energy supply, as an alternative or as a complement to electric batteries for powering of electric motor drive systems, such as in electric vehicles. A polymer electrolyte membrane (PEM) fuel cell system is a power generation system which uses PEM fuel cells to generate electricity by a chemical reaction of oxygen and hydrogen. The generated electricity is then utilized to power electrical motor(s) and/or various components of the electrical vehicle. Fuel cell systems may also be used in various other applications, such as in stationary gensets, in vessels, etc.

Today, a fuel cell vehicle typically uses compressed hydrogen gas stored in an onboard hydrogen storage. The onboard storage is limited in volume and size, and with a relatively small hydrogen storage capability, a maximum range of the electrical vehicle may be relatively low in comparison with diesel powered vehicles. The vehicle hence has to refuel the hydrogen gas after a relatively short period of time.

CN112467178A discloses a vehicle-mounted fuel cell hydrogen supply system taking iron powder as fuel, which comprises a fuel cell stack provided with a cathode inlet, an anode inlet, a cathode outlet and an anode outlet, wherein the system further comprises a hydrogen generation pipeline for introducing water discharged from the cathode outlet or the anode outlet, wherein a plurality of steel cylinders which are connected in parallel and store iron powder and hydrogen are arranged on the hydrogen generation pipeline, and the hydrogen generation pipeline is communicated to an anode inlet of the fuel cell stack.

Fuel cell systems are known in which hydrogen fuel supply to the fuel cells is provided by generating hydrogen gas by reaction of a metal or a metal compound with water. In such fuel cell systems, the space needed for hydrogen storage is reduced since hydrogen is generated on demand. However, the systems typically release large amounts of thermal energy and are associated with relatively low energy efficiency.

In view of the above, there is a need to develop an improved fuel cell related technology which takes at least some of the above concerns into account.

### SUMMARY

A primary object of the invention is to provide an, in at least some aspect, improved fuel cell system. Another object is to provide a fuel cell system having an improved efficiency and/or improved hydrogen storage capability in comparison with known fuel cell systems. According to a first aspect of the invention, at least the primary object is achieved by a fuel cell system according to claim 1. Hence, a fuel cell system is provided, comprising:
- a fuel cell stack configured to react hydrogen supplied to an anode side of the fuel cell stack and oxygen supplied to a cathode side of the fuel cell stack to produce electric power,
- a metal source,
- an oxidiser furnace configured to react metal supplied from the metal source with water to form metal oxide and generate hydrogen gas,
- a hydrogen supply arrangement configured to supply hydrogen gas generated in the oxidiser furnace to the anode side of the fuel cell stack,
- a first expander arranged in a conduit of the hydrogen supply arrangement, the first expander being configured to expand a gas mixture from the oxidiser furnace, the gas mixture comprising the hydrogen gas and excess water steam,
- a compressor configured to provide compressed air to the cathode side of the fuel cell stack,
   wherein the compressor is configured to be driven by energy recuperated from the first expander,
- a water separating arrangement arranged downstream of the first expander in the hydrogen supply arrangement, wherein the water separating arrangement is configured to separate water from the hydrogen gas, and
- a water recirculation conduit configured to direct the separated water from the water separating arrangement back to the oxidiser furnace.

By the provision of a fuel cell system provided with an oxidiser furnace and configured to use energy recuperated from the hydrogen generation process to drive the compressor, it is not necessary to use only electricity generated by the fuel cell for running the compressor. Instead, excess energy from the hydrogen generation process is used for compression of air which is to be supplied to the cathode side of the fuel cell stack. This significantly improves the efficiency of the fuel cell system in comparison with systems in which the compressor is driven by fuel cell generated electricity.

The fuel cell system as described herein is useful in all fuel cell applications where there is a need for a high-density energy storage of hydrogen. Hydrogen is herein obtained from reactions of a metal with water. Hence, there is no need to use a conventional hydrogen storage, such as a compressed hydrogen storage tank, with a limited storage capacity. This is particularly beneficial when the fuel system is provided in an electrical vehicle. The vehicle does not have to go to a hydrogen refuelling station to refuel the hydrogen gas. Instead, it just simply needs to replace the metal source when it is out.

The metal oxide, obtained from the metal-water oxidation reaction, may be collected in a dedicated storage tank. The collected oxidized metal may be delivered to a metal recovery plant for recovery. The recovered metal may then be used again as the metal source for hydrogen generation.

The metal source may preferably be an aluminium source. The metal source may alternatively be a metal source of iron, barium etc. The un-oxidized metal may typically be stored under an inert gas to prevent the formation of a protective oxide layer and be brought into the oxidiser furnace to be mixed with water steam therein.

Energy recuperated from the first expander is herein to be understood as kinetic energy released in the expansion of the gas mixture in the first expander. Typically, the hot gas mixture, released from the furnace, expands through the expander, and spins an expander wheel thereof, which rotates a shaft on which the expander wheel is fixed.

The compressor may be provided in an air intake of the fuel cell stack, at the cathode side, for delivering the compressed air to the fuel cell stack, hence delivering the oxygen needed for the reaction with the hydrogen supplied to the anode side.

Optionally the fuel cell system further comprises an electric machine configured to generate electric power from energy recuperated from the first expander. This may further improve the power output from the fuel cell system since excess energy not needed to drive the compressor may instead be used for producing electric power. As mentioned above, the electric machine, such as a motor/generator, may also be used for driving the compressor at the beginning of the hydrogen generation processor.

Optionally the compressor and the first expander are mechanically connected by a common shaft. More specifically, an expander wheel of the first expander and a compressor wheel of the compressor may be mechanically connected by the common shaft. This is a compact and energy efficient configuration. The compressor may hence comprise a compressor wheel fixed on the same shaft as the expander wheel, whereby the kinetic energy from the rotation of the expander wheel, or from the shaft, can be utilized to drive the compressor.

Optionally, the electric machine is arranged on the common shaft. Hence, the common shaft forms part of a rotor of the electric machine. At the beginning of the hydrogen generation process, before the gas flow reaches the first expander and before the kinetic energy is released, the compressor may be driven by the electric machine operated as a motor.

Optionally, the fuel cell system further comprises a second expander configured to expand excessive air from the fuel cell stack, wherein the second expander is arranged on the common shaft. The second expander may hence be located in an exhaust conduit from the fuel cell stack. The provision of such a second expander may further improve the energy efficiency of the fuel cell system.

The fuel cell system further comprises:
- a water separating arrangement arranged downstream of the first expander in the hydrogen supply arrangement, wherein the water separating arrangement is configured to separate water from the hydrogen gas, and
- a water recirculation conduit configured to direct the separated water from the water separating arrangement back to the oxidiser furnace.

In this way, excess water from the metal-water oxidation reaction, which would otherwise have been wasted, is now redirected to the oxidiser furnace for the next cycle of the reaction. This further improves an efficiency of the system and can provide the necessary amount of water to provide a continuous feed to the oxidiser furnace, thereby releasing more hydrogen for the fuel cell operation / conversion to electric energy, as described below.

Optionally the water separating arrangement comprises a condenser.

The water separating arrangement may further comprise a water trap arranged downstream of the condenser, wherein the hydrogen supply arrangement is configured to supply the hydrogen from the water trap to the anode side of the fuel cell stack. Herein, the water separating arrangement is configured for separating the hydrogen from the condensed water, by condensation cooling. The water trap may, for example, be a cooling zeolite block configured to trap moisture and release it when heated. Hydrogen gas supplied from the water trap is thereby dry when delivered to the fuel cell stack.

Optionally, the fuel cell system further comprises a water tank for collecting the condensed water to be supplied to the oxidiser furnace.

Optionally, the fuel cell system may comprise a water directing arrangement configured to direct exhaust water from the fuel cell stack to the water tank. In this way, exhaust in the form of water from the reaction in the fuel cell stack can be re-used in the hydrogen generation process. This reduces the need to refill the water tank from external water sources.

In some embodiments, the metal source comprises an elongated metal member, and the fuel cell system further comprises a feeding arrangement configured to feed the elongated metal member to the oxidiser furnace. Herein the elongated metal member may, for instance, be a unoxidized strip, a bar, a wire, a rod, or similar, and the feeding arrangement is configured for feeding the elongated metal member to the oxidiser furnace little by little. For example, the elongated metal member may be provided as a thin rod, wherein one end of the rod is fed to the oxidiser furnace. The feeding arrangement may be motor-driven and configured to feed the elongated metal member at a predetermined or adjustable rate to the oxidiser furnace.

Alternatively, the metal source may comprise a metal powder or a metal granulate stored in a container and the fuel cell system may further comprise a feeding arrangement configured to feed the metal powder or metal granulate to the oxidiser furnace. In some embodiments, the storage container may be located above the oxidiser furnace so that the metal powder or granulate may be fed to the oxidiser furnace by means of gravity via a metal supply conduit. An adjustable port or valve may be provided for adjusting a feed rate of the metal supply.

Optionally, the fuel cell system further comprises a heating arrangement, such as at least one resistive heater, configured to heat the metal supplied to the oxidiser furnace, and/or to heat the water supplied to the oxidiser furnace, and/or to temporarily heat the water trap to release water. Energy from the fuel cell system and/or from regenerative braking may be used to power the heating arrangement. The heating arrangement may comprise more than one heater, such as at least a first heater for heating the metal and a second heater for heating the water supplied to the oxidiser furnace.

According to a second aspect of the invention, a vehicle comprising the fuel cell system according to the first aspect is provided. The vehicle may be a truck, a bus, construction equipment, e.g., a wheel loader or an excavator, a passenger car, or a marine vessel.

According to a third aspect of the invention, a method for producing electric power in a fuel cell system according to the first aspect is provided. The method comprises:
- supplying metal from the metal source to the oxidiser furnace,
- supplying water to the oxidiser furnace,
- reacting the metal and the water in the oxidiser furnace to form metal oxide and generate hydrogen gas,
- expanding the gas mixture from the oxidiser furnace in the first expander and directing the hydrogen gas from the first expander to the fuel cell stack,
- using energy recuperated from the first expander to drive the compressor to provide compressed air to the fuel cell stack.

Advantages and advantageous features of the disclosed method largely correspond to those described in connection with the fuel cell system according to the first aspect.

Optionally, the method may further comprise heating the metal supplied to the oxidiser furnace, such as by means of the above-described heating arrangement.

Optionally, the method may further comprise directing exhaust water from the fuel cell stack to the oxidiser furnace.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic side view of a vehicle;
Fig. 2 is a schematic view of a fuel cell system according to an embodiment of the invention;
Fig. 3 is a flow chart illustrating a method according to an embodiment of the invention; and

### DETAILED DESCRIPTION OF EXAMPLE EMBODIMENTS OF THE INVENTION

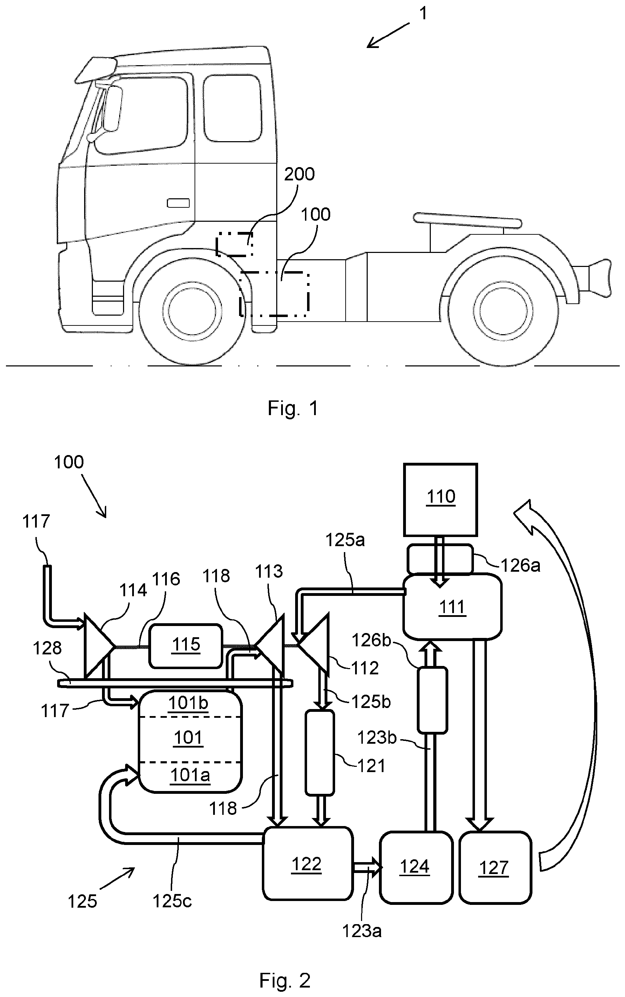

Fig. 1 depicts a vehicle 1 according to an example embodiment of the invention. The vehicle 1 is here a truck, more specifically a heavy-duty truck for towing one or more trailers (not shown). Even though a heavy-duty truck is shown it shall be noted that the invention is not limited to this type of vehicle but may be used for any other type of vehicle, such as a bus, construction equipment, e.g., a wheel loader and an excavator, a passenger car, and for a marine vessel. The invention is also applicable for other applications not relating to vehicles, such as a stationary genset, as long as a fuel cell system is utilized.

The vehicle 1 comprises a fuel cell system 100. The fuel cell system 100 is here used for powering one or more electric motors (not shown) which are used for creating a propulsion force to the vehicle 1. The fuel cell system 100 may additionally or alternatively be used for powering other electric power consumers (not shown) of the vehicle 1, such as an electric refrigerator system, an air conditioning system, or any other electric power consuming function of the vehicle 1. The fuel cell system 100 may form part of a power system of the vehicle 1, which power system further comprises an electric energy storage system, ESS (not shown), comprising one or more batteries for storing electric power produced by the fuel cell system 100 and for providing complementary electric power for running the vehicle 1 and/or for powering electric consumers of the vehicle 1. At least one electronic control unit 200 is herein provided for controlling the fuel cell system 100 and the various components thereof.

Fig. 2 shows a schematic view of the fuel cell system 100 according to an embodiment of the invention.

The fuel cell system 100 comprises a fuel stack 101 for converting chemical energy of hydrogen and oxygen into electricity. The fuel cell system may be a proton-exchange membrane fuel cell system, also referred to as a polymer electrolyte membrane (PEM) fuel cell system. During the use of the fuel cell system 100, the hydrogen is supplied to an anode side 101a of the fuel cell stack 101 via a hydrogen supply arrangement 125 and the oxygen in the form of compressed air is supplied to a cathode side 101b of the fuel cell stack 101 via an air inlet conduit 117. A compressor 114 is for this purpose provided in the air inlet conduit 117. In addition, an oxidiser furnace 111 is provided and is configured to, under high pressure, react metal from a metal source 110 with water, typically water in the form of overheated steam, to form metal oxide and generate hydrogen gas to be supplied to the fuel cell stack 101 via the hydrogen supply arrangement 125. A conventional hydrogen storage tank of a fuel cell powered vehicle is thereby replaced by the metal source 110 and the oxidiser furnace 111. The hydrogen generation and supply process will be explained in detail in the following paragraphs.

The metal is supplied to the oxidiser furnace 111 from the metal source 110, which may comprise an elongated metal member, e.g., a strip, a bar, a wire, or similar. A feeding arrangement (not shown) is configured to feed the elongated metal member to the oxidiser furnace 111 little by little. For example, the elongated metal member may be provided as a coil, wherein one end of the coil is fed to the oxidiser furnace 111. The feeding arrangement may be motor driven and configured to feed the elongated metal member at a predetermined or adjustable rate to the oxidiser furnace 111. Alternatively, the metal source 110 may comprise a metal powder or a metal granulate stored in a container (not shown). In some embodiments, the storage container may be located above the oxidiser furnace 111 so that the metal powder or granulate may be fed to the oxidiser furnace by means of gravity via a metal supply conduit. An adjustable port or valve (not shown) may be provided for adjusting a feed rate of the metal supply.

As an example, when the metal source 110 is an aluminium source, the aluminium reacts with water, in the form of steam, to form hydrogen and aluminium oxide according to the reaction:

2Al + 3H₂O → Al₂O₃ + 3H₂.

A heating arrangement may further be provided. In the illustrated embodiment, a heating arrangement comprising a first heater 126a and a second heater 126b is provided. The first heater 126a, such as a resistive heater, is arranged for heating the metal supplied to the oxidiser furnace 111 from the metal source 110. Energy from the fuel cell system 100 and/or from regenerative braking may be used to power the first heater 126a. The heater 126a may be arranged to heat the metal as it enters the oxidiser furnace 111, hence it may form part of the oxidiser furnace 111. The second heater 126b will be described in further detail below.

The fuel cell system 100 further comprises a first expander 112. After the hydrogen generation process, a gas mixture, containing hydrogen gas and water steam, is guided to the first expander 112 through a first conduit 125a of the hydrogen supply arrangement 125. The hot gas mixture will expand through the expander 112 and spin an expander wheel (not shown) of the expander 112. The expander wheel will further rotate a shaft 116 on which the expander wheel is provided. The first expander 112 may be a turbine. In the example shown in fig. 2, the compressor 114 is located on the same shaft 116 as the first expander 112. Thereby, the compressor 114 can be driven by the kinetic energy from the rotation of the expander 112 and the shaft 116. In the illustrated embodiment, a second expander 113 is also provided, configured to expand excessive air form the fuel cell stack 101. The second expander 113 is arranged in an exhaust conduit 118 from the fuel cell stack 101 and is herein arranged on the common shaft 116. In other words, both the first and second expanders 112, 113 and the compressor 114 comprise wheels mechanically connected by the common shaft 116.

The fuel cell system 100 may further comprise an electric machine 115 in the form of a motor/generator. As shown in fig. 2, the electric machine 115 may be arranged on the common shaft 116, such that the common shaft 116 forms part of a rotor of the electric machine 115. Hence, the electric machine 115 can be driven by the kinetic energy from the rotation of the shaft 116. At the beginning of the hydrogen generation process, the electric machine 115 may be powered by a battery (not shown) and thereby drive the compressor 114, until the gas flow from the oxidiser furnace 110 reaches the first expander 112 and the kinetic energy is released. After the wheel of the expander 112 and the shaft 116 start to rotate, the compressor 114 as well as the electric machine 115 can be driven by the kinetic energy. Hence kinetic energy from the electric machine 115 may be used for producing electric power contributing to a power output from the fuel cell system 110. This improves an efficiency of the fuel cell system 100.

The gas mixture from the first expander 112 will be guided to a water separating arrangement arranged downstream of the first expander 112, via a second conduit 125b. The water separating arrangement herein comprises a condenser 121 and a water trap 122 arranged downstream of the condenser 121. Herein, the water separating arrangement is configured to separate the hydrogen gas from the condensed water, by condensation cooling. The dry hydrogen gas will then be delivered to the anode side 101a of the fuel cell stack 101 via a third conduit 125c. A fuel injector (not shown) may be provided for injecting the hydrogen into the fuel cell stack 101. The water trap 122 may, for example, be a cooling zeolite block. In some embodiments, a heater (not shown), such as a resistive heater, may be provided for temporarily heating the water trap 122 to release water trapped therein.

A water recirculation conduit is provided for directing the separated water from the water trap 122 back to the oxidiser furnace 111. The water recirculation conduit comprises a first water conduit 123a and a second water conduit 123b. The first water conduit 123a directs the water to a water tank 124. The water tank 124 is configured to collect the condensed water to be supplied to the oxidiser furnace 111 via the second water conduit 123b. The second heater 126b, which may, e.g., be a resistive heater, is herein provided for heating the water fed to the oxidiser furnace 111 and form steam. Alternatively, the water may be heated by the heat within the oxidiser furnace 111 itself.

In the illustrated embodiment, the fuel cell system 100 further comprises a water directing arrangement configured to direct exhaust water from the fuel cell stack 101 to the water tank 124. The exhaust water from the fuel cell stack 101, together with excess gas, is guided through the exhaust conduit 118, via the second expander 113, and further to the water trap 122. From the water trap 122, the water is guided to the water tank 124 via the first water conduit 123a. The exhaust conduit 118 passes via a humidifier 128, which is configured to use water from the exhaust to humidify the inlet air provided to the cathode side 101b of the fuel cell stack 101 via the air inlet conduit 117.

The fuel cell system 100 as described herein may comprise a manifold and/or a plurality of different fluid conduits in addition to the ones described above. It may further comprise valves, pumps and/or fans for guiding fluids and/or inducing flows within the fuel cell system 100. The fuel cell system 100 may further comprise a cooling system (not shown).

The fuel cell system 100 may further comprise a storage tank 127 for collecting metal oxide obtained from the metal-water oxidation reaction in the oxidiser furnace 111. The collected oxidized metal may be transferred to a metal recovery plant for recovery. The recovered metal may then be reused as a metal source for hydrogen generation or used for other purposes.

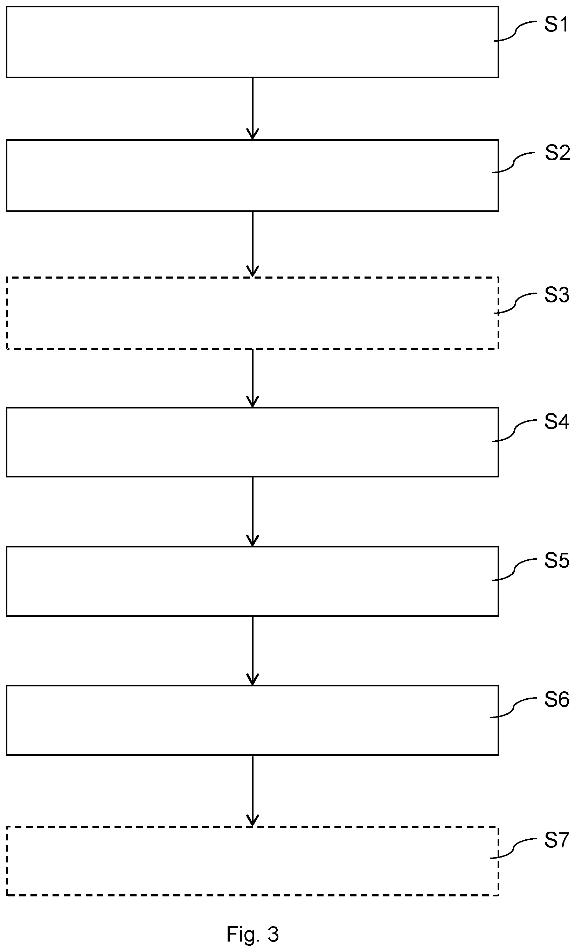

Fig. 3 illustrates a method for producing electric power in a fuel cell system, such as in the fuel cell system 100 illustrated in fig. 2. The method comprises the actions below, which may be performed in any suitable order. Optional actions are marked by dashed boxes in Fig. 3.

### Action S1

In a first action S1, metal is supplied from the metal source 110 to the oxidiser furnace 111.

### Action S2

In a second action S2, water is supplied to the oxidiser furnace 111, such as from the water tank 124.

### Action S3

In an optional third action S3, the metal supplied to the oxidiser furnace 111 is heated, such as by the first heater 126a, before it enters into the oxidiser furnace 111. Additionally, the water supplied to the oxidiser furnace 111 may be heated to form overheated steam by the second heater 126b before entering the oxidiser furnace 111. Alternatively, the water may be heated by the heat within the oxidiser furnace 111 itself. As the reaction within the oxidiser furnace 111 continues, the electric power consumed by the first heater 126a and/or the second heater 126b may be reduced due to heat leakage from the oxidiser furnace 111 contributing to the heating. The first heater 126a may be controlled to melt the metal at a desired melt rate prior to entering the oxidiser furnace.

### Action S4

In a fourth action S4, the metal and the water, in the form of superheated steam, are reacted under pressure in the oxidiser furnace 111 to form metal oxide and generate hydrogen gas. The reaction is performed at a high temperature, such as at a temperature above 700°C but below 1000°C, typically above 770°C. For example, the temperature may be within the range of 780-900°C.

### Action S5

In a fifth action S5, the gas mixture from the oxidiser furnace 111 is expanded in the first expander 112 and the hydrogen gas is directed from the first expander 112 to the fuel cell stack 101 via the hydrogen supply arrangement 125. As explained above, the gas mixture may be passed through the water separating arrangement to separate the water from the hydrogen and to dry the hydrogen prior to being delivered to the fuel cell stack 101.

### Action S6

In a sixth action S6, energy recuperated from the first expander 112 is used to drive the compressor 114 to provide compressed air to the fuel cell stack 101.

### Action S7

In an optional action S7, exhaust water from the fuel cell stack 101 is directed to the oxidiser furnace 111.

The at least one control unit 200 referred to above may be one or more electronic control units comprising processing circuitry which is adapted to run a computer program. The control unit 200 may comprise hardware and/or software for performing the method according to the invention, such as for controlling the oxidiser furnace 111, the heating arrangement comprising the first and second heaters 126a, 126b, the electric machine 115, and various injectors, valves, pumps and/or fans of the fuel cell system 100. The control unit 200 may be constituted by one or more separate sub-control units. In addition, the control unit 200 may be configured to communicate by use of wired and/or wireless communication means.

It is to be understood that the present invention is not limited to the embodiments described above and illustrated in the drawings; rather, the skilled person will recognize that many changes and modifications may be made within the scope of the appended claims.

## Claims

1. A fuel cell system (100), comprising:
- a fuel cell stack (101) configured to react hydrogen supplied to an anode side (101a) of the fuel cell stack (101) and oxygen supplied to a cathode side (101b) of the fuel cell stack (101) to produce electric power,
- a metal source (110),
- an oxidiser furnace (111) configured to react metal supplied from the metal source (110) with water to form metal oxide and generate hydrogen gas,
- a hydrogen supply arrangement (125) configured to supply hydrogen gas generated in the oxidiser furnace (111) to the anode side (101a) of the fuel cell stack (101),
- a first expander (112) arranged in a conduit (125a) of the hydrogen supply arrangement (125), the first expander (112) being configured to expand a gas mixture from the oxidiser furnace (111), the gas mixture comprising the hydrogen gas and excess water steam,
- a compressor (114) configured to provide compressed air to the cathode side (101b) of the fuel cell stack (101),
wherein the compressor (114) is configured to be driven by energy recuperated from the first expander (112),
- a water separating arrangement arranged downstream of the first expander (112) in the hydrogen supply arrangement (125), the water separating arrangement being configured to separate water from the hydrogen gas, and
- a water recirculation conduit (123a, 123b) configured to direct the separated water from the water separating arrangement back to the oxidiser furnace (111).

2. The fuel cell system according to claim 1, further comprising an electric machine (115) configured to generate electric power from energy recuperated from the first expander (112).

3. The fuel cell system according to claim 1 or 2, wherein the compressor (114) and the first expander (112) are mechanically connected by a common shaft (116).

4. The fuel cell system according to claim 3 when dependent on claim 2, wherein the electric machine (115) is arranged on the common shaft (116).

5. The fuel cell system according to claim 3 or 4, further comprising a second expander (113) configured to expand excessive air from the fuel cell stack (101), wherein the second expander (113) is arranged on the common shaft (116).

6. The fuel cell system according to any one of the preceding claims, wherein the water separating arrangement comprises a condenser (121).

7. The fuel cell system according to claim 6, wherein the water separating arrangement further comprises a water trap (122) arranged downstream of the condenser (121), wherein the hydrogen supply arrangement (125) is configured to supply the hydrogen from the water trap (122) to the anode side (101a) of the fuel cell stack (101).

8. The fuel cell system according to any one of the preceding claims, further comprising a water tank (124) for collecting the condensed water to be supplied to the oxidiser furnace (111).

9. The fuel cell system according to claim 8, further comprising a water directing arrangement configured to direct exhaust water from the fuel cell stack (101) to the water tank (124).

10. The fuel cell system according to any one of the preceding claims, wherein the metal source (110) comprises an elongated metal member, and wherein the fuel cell system further comprises a feeding arrangement configured to feed the elongated metal member to the oxidiser furnace (111).

11. The fuel cell system according to any one of claims 1-9, wherein the metal source (110) comprises a metal powder or a metal granulate stored in a container, and wherein the fuel cell system (100) further comprises a feeding arrangement configured to feed the metal powder or metal granulate to the oxidiser furnace (111).

12. The fuel cell system according to any one of the preceding claims, further comprising a heating arrangement, such as at least one resistive heater (126a, 126b), configured to heat the metal supplied to the oxidiser furnace (111), and/or to heat the water supplied to the oxidiser furnace (111).

13. A vehicle (1) comprising the fuel cell system (100) according to any one of claims 1-12.

14. A method for producing electric power in a fuel cell system (100) according to any one of claims 1-12, the method comprising:
- supplying (S1) metal from the metal source (110) to the oxidiser furnace (111),
- supplying (S2) water to the oxidiser furnace (111),
- reacting (S4) the metal and the water in the oxidiser furnace (111) to form metal oxide and generate hydrogen gas,
- expanding (S5) the gas mixture from the oxidiser furnace (111) in the first expander (112) and directing the hydrogen gas from the first expander (112) to the fuel cell stack (101),
- using (S6) energy recuperated from the first expander (112) to drive the compressor (114) to provide compressed air to the fuel cell stack (101).

15. The method according to claim 14, further comprising:
- heating (S3) the metal supplied to the oxidiser furnace (111), and/or
- directing (S7) exhaust water from the fuel cell stack (101) to the oxidiser furnace (111).

## Patentansprüche

1. Brennstoffzellensystem (100), das Folgendes umfasst:
- einen Brennstoffzellenstapel (101), der dazu konfiguriert ist, den an die Anodenseite (101a) des Brennstoffzellenstapels (101) zugeführten Wasserstoff und den an die Kathodenseite (101b) des Brennstoffzellenstapels (101) zugeführten Sauerstoff reagieren zu lassen, um elektrische Leistung zu erzeugen,
- eine Metallquelle (110),
- eine Oxidationskammer (111), die dazu konfiguriert ist, von der Metallquelle (110) zugeführtes Metall mit Wasser reagieren zu lassen, um Metalloxid zu bilden und Wasserstoffgas zu erzeugen,
- eine Wasserstoffzuführanordnung (125), die dazu konfiguriert ist, in der Oxidationskammer (111) erzeugtes Wasserstoffgas der Anodenseite (101a) des Brennstoffzellenstapels (101) zuzuführen,
- eine erste Expansionsvorrichtung (112), die in einer Leitung (125a) der Wasserstoffzuführanordnung (125) angeordnet ist, wobei die erste Expansionsvorrichtung (112) dazu konfiguriert ist, ein Gasgemisch aus der Oxidationskammer (111) zu expandieren, wobei das Gasgemisch das Wasserstoffgas und überschüssigen Wasserdampf umfasst,
- einen Kompressor (114), der dazu konfiguriert ist, der Kathodenseite (101b) des Brennstoffzellenstapels (101) Druckluft bereitzustellen,
wobei der Kompressor (114) dazu konfiguriert ist, mit Energie angetrieben zu werden, die aus der ersten Expansionsvorrichtung (112) zurückgewonnen wird,
- eine Wasserabscheideanordnung, die nach der ersten Expansionsvorrichtung (112) in der Wasserstoffzuführanordnung (125) angeordnet ist, wobei die Wasserabscheideanordnung dazu konfiguriert ist, Wasser aus dem Wasserstoffgas abzuscheiden, und
- eine Wasserrücklaufleitung (123a, 123b), die dazu konfiguriert ist, das aus der Wasserabscheideanordnung abgeschiedene Wasser zurück zur Oxidationskammer (111) zu leiten.

2. Brennstoffzellensystem nach Anspruch 1, das ferner eine elektrische Maschine (115) umfasst, die dazu konfiguriert ist, elektrische Leistung aus der Energie zu erzeugen, die aus der ersten Expansionsvorrichtung (112) zurückgewonnen wird.

3. Brennstoffzellensystem nach Anspruch 1 oder 2, wobei der Kompressor (114) und die erste Expansionsvorrichtung (112) über eine gemeinsame Welle (116) mechanisch miteinander verbunden sind.

4. Brennstoffzellensystem nach Anspruch 3, wenn von Anspruch 2 abhängig, wobei die elektrische Maschine (115) auf der gemeinsamen Welle (116) angeordnet ist.

5. Brennstoffzellensystem nach Anspruch 3 oder 4, das ferner eine zweite Expansionsvorrichtung (113) umfasst, die dazu konfiguriert ist, überschüssige Luft aus dem Brennstoffzellenstapel (101) zu expandieren, wobei die zweite Expansionsvorrichtung (113) auf der gemeinsamen Welle (116) angeordnet ist.

6. Brennstoffzellensystem nach einem der vorhergehenden Ansprüche, wobei die Wasserabscheideanordnung einen Kondensator (121) umfasst.

7. Brennstoffzellensystem nach Anspruch 6, wobei die Wasserabscheideanordnung ferner einen Wasserabscheider (122) umfasst, der nach dem Kondensator (121) angeordnet ist, wobei die Wasserstoffzuführanordnung (125) dazu konfiguriert ist, der Anodenseite (101a) des Brennstoffzellenstapels (101) den Wasserstoff aus dem Wasserabscheider (122) zuzuführen.

8. Brennstoffzellensystem nach einem der vorhergehenden Ansprüche, das ferner einen Wassertank (124) zum Sammeln des Kondenswassers umfasst, das der Oxidationskammer (111) zugeführt werden soll.

9. Brennstoffzellensystem nach Anspruch 8, das ferner eine Wasserleitanordnung umfasst, die dazu konfiguriert ist, das Abwasser aus dem Brennstoffzellenstapel (101) in den Wassertank (124) zu leiten.

10. Brennstoffzellensystem nach einem der vorhergehenden Ansprüche, wobei die Metallquelle (110) ein längliches Metallelement umfasst, und wobei das Brennstoffzellensystem ferner eine Beschickungsvorrichtung umfasst, die dazu konfiguriert ist, die Oxidationskammer (111) mit dem länglichen Metallelement zu beschicken.

11. Brennstoffzellensystem nach einem der Ansprüche 1-9, wobei die Metallquelle (110) ein Metallpulver oder ein Metallgranulat umfasst, das in einem Behälter gelagert ist, und wobei das Brennstoffzellensystem (100) ferner eine Beschickungsvorrichtung umfasst, die dazu konfiguriert ist, die Oxidationskammer (111) mit dem Metallpulver oder Metallgranulat zu beschicken.

12. Brennstoffzellensystem nach einem der vorhergehenden Ansprüche, das ferner eine Heizanordnung umfasst, wie etwa mindestens eine Widerstandsheizung (126a, 126b), die dazu konfiguriert ist, das der Oxidationskammer (111) zugeführte Metall zu erhitzen und/oder das der Oxidationskammer (111) zugeführte Wasser zu erhitzen.

13. Fahrzeug (1), das das Brennstoffzellensystem (100) nach einem der Ansprüche 1-12 umfasst.

14. Verfahren zum Erzeugen von elektrischer Leistung in einem Brennstoffzellensystem (100) nach einem der Ansprüche 1-12, wobei das Verfahren Folgendes umfasst:
- Zuführen (S1) von Metall aus der Metallquelle (110) zur Oxidationskammer (111),
- Zuführen (S2) von Wasser zur Oxidationskammer (111),
- Reagierenlassen (S4) des Metalls und des Wassers in der Oxidationskammer (111), um Metalloxid zu bilden und Wasserstoffgas zu erzeugen,
- Expandieren (S5) des Gasgemischs aus der Oxidationskammer (111) in der ersten Expansionsvorrichtung (112) und Leiten des Wasserstoffgases aus der ersten Expansionsvorrichtung (112) zum Brennstoffzellenstapel (101),
- Verwenden (S6) von Energie, die aus der ersten Expansionsvorrichtung (112) zurückgewonnen wird, um den Kompressor (114) anzutreiben, um dem Brennstoffzellenstapel (101) Druckluft zuzuführen.

15. Verfahren nach Anspruch 14, das ferner Folgendes umfasst:
- Erhitzen (S3) des der Oxidationskammer (111) zugeführten Metalls, und/oder
- Leiten (S7) von Abwasser aus dem Brennstoffzellenstapel (101) zur Oxidationskammer (111).

## Revendications

1. Système de pile à combustible (100), comprenant :
- un empilement de piles à combustible (101) configuré pour faire réagir l'hydrogène fourni à un côté anode (101a) de l'empilement de piles à combustible (101) et l'oxygène fourni à un côté cathode (101b) de l'empilement de piles à combustible (101) pour produire de l'énergie électrique,
- une source de métal (110),
- un four à oxydation (111) configuré pour faire réagir le métal fourni par la source de métal (110) avec de l'eau pour former un oxyde métallique et générer de l'hydrogène gazeux,
- un dispositif d'alimentation en hydrogène (125) configuré pour apporter l'hydrogène gazeux généré dans le four à oxydation (111) vers le côté anode (101a) de l'empilement de piles à combustible (101),
- un premier détendeur (112) disposé dans un conduit (125a) du dispositif d'alimentation en hydrogène (125), le premier détendeur (112) étant configuré pour dilater un mélange gazeux provenant du four à oxydation (111), le mélange gazeux comprenant l'hydrogène gazeux et l'excès de vapeur d'eau,
- un compresseur (114) configuré pour fournir de l'air comprimé au côté cathode (101b) de l'empilement de piles à combustible (101),
le compresseur (114) étant configuré pour être entraîné par l'énergie récupérée du premier détendeur (112),
- un dispositif de séparation d'eau disposé en aval du premier détendeur (112) dans le dispositif d'alimentation en hydrogène (125), le dispositif de séparation d'eau étant configuré pour séparer l'eau de l'hydrogène gazeux, et
- un conduit de recirculation d'eau (123a, 123b) configuré pour renvoyer l'eau séparée du dispositif de séparation d'eau vers le four à oxydation (111).

2. Système de pile à combustible selon la revendication 1, comprenant en outre une machine électrique (115) configurée pour générer de l'énergie électrique à partir de l'énergie récupérée à partir du premier détendeur (112).

3. Système de pile à combustible selon la revendication 1 ou 2, dans lequel le compresseur (114) et le premier détendeur (112) sont reliés mécaniquement par un arbre commun (116).

4. Système de pile à combustible selon la revendication 3 lorsqu'elle dépend de la revendication 2, dans lequel la machine électrique (115) est disposée sur l'arbre commun (116).

5. Système de pile à combustible selon la revendication 3 ou 4, comprenant en outre un second détendeur (113) configuré pour dilater l'air en excès provenant de l'empilement de piles à combustible (101), le second détendeur (113) étant disposé sur l'arbre commun (116).

6. Système de pile à combustible selon l'une quelconque des revendications précédentes, dans lequel le dispositif de séparation d'eau comprend un condenseur (121).

7. Système de pile à combustible selon la revendication 6, dans lequel le dispositif de séparation d'eau comprend en outre un piège à eau (122) agencé en aval du condenseur (121), le dispositif d'alimentation en hydrogène (125) étant configuré pour fournir l'hydrogène du piège à eau (122) au côté anode (101a) de l'empilement de piles à combustible (101).

8. Système de pile à combustible selon l'une quelconque des revendications précédentes, comprenant en outre un réservoir d'eau (124) pour recueillir l'eau condensée à fournir au four à oxydation (111).

9. Système de pile à combustible selon la revendication 8, comprenant en outre un dispositif de direction d'eau configuré pour diriger l'eau d'échappement de l'empilement de piles à combustible (101) vers le réservoir d'eau (124).

10. Système de pile à combustible selon l'une quelconque des revendications précédentes, dans lequel la source de métal (110) comprend un élément métallique allongé, et le système de pile à combustible comprend en outre un dispositif d'alimentation configuré pour apporter l'élément métallique allongé au four à oxydation (111).

11. Système de pile à combustible selon l'une quelconque des revendications 1 à 9, dans lequel la source de métal (110) comprend une poudre métallique ou un granulat métallique stocké dans un conteneur, et le système de pile à combustible (100) comprend en outre un dispositif d'alimentation configuré pour apporter la poudre métallique ou le granulat métallique au four à oxydant (111).

12. Système de pile à combustible selon l'une quelconque des revendications précédentes, comprenant en outre un dispositif de chauffage, tel qu'au moins un dispositif de chauffage résistif (126a, 126b), configuré pour chauffer le métal fourni au four à oxydation (111), et/ou pour chauffer l'eau fournie au four à oxydation (111).

13. Véhicule (1) comprenant le système de pile à combustible (100) selon l'une quelconque des revendications 1 à 12.

14. Procédé pour produire de l'énergie électrique dans un système de pile à combustible (100) selon l'une quelconque des revendications 1 à 12, le procédé comprenant :
- l'apport (S1) de métal de la source de métal (110) au four à oxydation (111),
- l'alimentation (S2) en eau du four à oxydation (111),
- la réaction (S4) du métal et de l'eau dans le four à oxydation (111) pour former de l'oxyde métallique et générer de l'hydrogène gazeux,
- la détente (S5) du mélange gazeux provenant du four à oxydation (111) dans le premier détendeur (112) et l'acheminement de l'hydrogène gazeux provenant du premier détendeur (112) vers l'empilement de piles à combustible (101),
- l'utilisation (S6) de l'énergie récupérée du premier détendeur (112) pour entraîner le compresseur (114) afin de fournir de l'air comprimé à l'empilement de piles à combustible (101).

15. Procédé selon la revendication 14, comprenant en outre :
- le chauffage (S3) du métal fourni au four à oxydation (111), et/ou
- l'acheminement (S7) de l'eau d'échappement de l'empilement de piles à combustible (101) vers le four à oxydation (111).
